# EUROPEAN PATENT APPLICATION

(11) **EP 2 965 849 A1**
(43) Date of publication of application: **13.01.2016**
(21) Application number: 14468005.5
(22) Date of filing: 11.07.2014
(51) Int. Cl.: B23K 20/12

(54) **Friction stir welding tool cleaning method during welding cycle**

(71) Applicant: RC Simit, d.o.o. Poslovna enota Ljubljana, 1000 Ljubljana (SI)
(72) Inventor: Kumer, Miha, 1000 Ljubljana (SI); Muhic, Tadej, 8000 Novo mesto (SI); Podlipnik, Gregor, 4220 Skofja Loka (SI); Megusar, Andrej, 4227 Selca (SI)
(74) Representative: Macek, Gregor

(57) **Abstract**

The invention provides a new friction stir welding tool cleaning method for retractable and fixed pin tools. The method can be used almost on all friction stir welding machines without any machine modifications. Cleaning cycle is applied at the end of the welding path. Instead of normal tool retraction out of the workpiece, the feed rate and spindle speed stops for short period of time. In this case the material around the pin and the shoulder hardens completely. Tool withdraws in a vertical direction and rips itself out of the workpiece. In this case, the plasticized residue that normally stays on the tool, i. e. the pin and the shoulder creates a stronger bond with the workpiece and stays joined with it, instead of being attached to the tool. Additionally, feed rate per revolution equal to the pin tap pitch out of the workpiece after short distance is carried out in order to clean the pin between helix (tap).

## Description

### FIELD OF INVENTION

The present invention relates to the tool cleaning method suitable for most of the friction stir welding applications where plasticized residue on the tool generally presents a problem. The invention is suitable for prototype, as well as for serial production. The only limitation of this cleaning method is with welding high strength material workpieces, where ratios between tensile strength of the welding pin and the base material are low.

### BACKGROUND OF INVENTION

Friction stir welding (FSW) process is a solid-state joining process, which means that welding temperatures newer rise above melting point of the base material like with the conventional welding. Heat is generated between the rotating FSW tool and the workpiece which leads to softening of the base material, i.e. the material enters the plasticized phase in which the material can be pressured and stirred together. The resulting solid phase bond joins the two pieces together.

The process is designed in such a manner that it does not use any outside material and shielding gases. It requires low energy input, which is also the reason for low workpiece deformations and high weld quality. A detailed description of FSW process can be found in European patent application EP0752926 B1.

However, the process requires much setup-time in order to achieve optimal welding parameters. Suboptimal parameters usually result in plasticized residue on the welding pin and the shoulder which leads to inadequate weld quality. Plasticized residue can occur after only one meter of weld if parameters are false or after as much as 200 m if the parameters are nearly optimal. Usually the critical plasticized residue occurs somewhere in between. Furthermore, plastic residue on FSW tool increases vibrations, which lead to instability of process and premature tool breaking. The main reason for inadequate weld quality due to the residue on the welding pin is decreasing the efficient pin surface, which is crucial for heat generation (D. M. Neto, P. Neto, Numerical modeling of the friction stir welding process, Department of Mechanical Engineering (CEMUC) - POLO II, University of Coimbra, 3030-788 Coimbra, Portugal).

This problem had been solved in the past, more or less successfully. There are several friction stir welding tool cleaning methods. One is cleaning the FSW tool with a pick or a small screwdriver. This method is time-consuming, the residue is removed only partially and the method is not reproducible, which leads to instability of the FSW process. Furthermore, the FSW tool could be damaged while removing the residue manually.

The second method involves heating the FSW tool using a blow torch or an inductive heater with the combination of a small screwdriver or a steel brush. This method is also time-consuming and could damage the tool because the temperature cannot be adequately controlled. If the heat is too great, the tool material can anneal and the pike or a brush damages the tool even quicker.

The third method is etching the FSW tool in sodium hydroxide solution or other workpiece dissolving solution. This method can take from one hour and up to few days and normally does not dissolve the residue completely. Plasticized residue chemical composition usually differs from the workpiece base material, especially when welding casting parts with many alloying elements. For example: when welding Al 230 (AlSi12), the residue consists of only 23% of Al, other materials are 26% Si, 15% Fe 15% Zn, etc. This makes etching the residue almost impossible without damaging the FSW tool.

According to patent US 7,641,739 B2, the fourth and the most efficient method for FSW tool cleaning is by using a specially designed apparatus for this application. The apparatus is designed to clean the entire FSW tool, either retractable or fixed. Heat is applied to the FSW tool using an induction coil until the residue softens enough to be removed. In the second stage, the rotating steel brush cleans the pin and the shoulder and if the pin is retractable, additional bore cleaner is applied to remove the plasticized residue in the bore. This method is efficient and useful, but has many disadvantages.

Firstly, purchasing this apparatus is costly, which is a significant drawback, especially in prototype production.

Secondly, the entire cleaning cycle takes from 3 to 4 minutes to achieve optimal results. If constant weld quality and process stability are to be maintained, the cleaning cycle should be applied before any significant amount of the residue appears. In this case, the cleaning cycle could take up to 6% of welding time per day, which is inefficient for serial production.

Thirdly, the apparatus design is big and cumbersome, and hence unsuitable for many CNC machines with smaller working areas.

Fourthly, such apparatus does not provide accurate and repeatable positioning in the working area of the machine, and is therefore problematic for serial production.

Fifthly, when using very ductile materials for FSW tools for example MP159 with hardness less than 55HRC, damage to the tool due to high strength brushes, especially at greater temperatures, is inevitable.

All the above mentioned deficiencies were solved by the method according to the invention.

Object of the present invention is thus to provide an efficient FSW tool cleaning method, without any machine modifications in order to increase weld quality, process stability and tool lifetime.

Another objective of this invention is to provide a tool design which prevents the loosening of the welding pin and the shoulder.

The invention will be further explained hereinafter and presented on drawings.

### BRIEF DESCRIPTION OF THE DRAWINGS

**FIG 1****.** Schematic perspective view of conventional friction stir welding butt joint between two parallel members (Prior Art).
**FIG 2****.** Cross-sectional view of FSW tool and workpiece during normal welding cycle in tree steps (Prior Art). Figure 2a represents the FSW tool with parameters during movement. Figure 2b represents FSW tool in moment before the feedrate changes the direction from horizontal to opposite direction of the down force. Figure 2c represents normal retract of the FSW tool out of the workpiece including constant rotation.
**FIG 3****.** Isometric view illustration of the FSW tool filled with plasticized residue before applying the cleaning cycle.
**FIG 4****.** Cross-sectional view of the FSW tool and workpiece during the introduction of the cleaning cycle in four steps according to the invention. Figure 4a displays the FSW tool with parameters during movement. Figure 4b represents the FSW tool in the moment before the feed rate changes the direction from horizontal to vertical. In figure 4c, the FSW tool retracts out of the work piece for a short distance without rotating. Figure 4d represents feed rate per revolution equal to the pin tap pitch out of the work piece.
**FIG 5****.** Isometric view illustration of FSW tool after applying the complete cleaning cycle.
**FIG** 6. Cross-sectional and isometric view of slightly modified FSW pin for cleaning cycle.

### DETAILED DESCRIPTION OF THE INVENTION

The invention provides a new FSW tool cleaning method, which does not require any machine modifications. Conventional FSW processes usually result in plasticized residue on the welding pin and the shoulder, i. e. the tool, which increases, depending on the welding path. That leads to inadequate weld quality, vibrations, process instability and premature tool breaking.

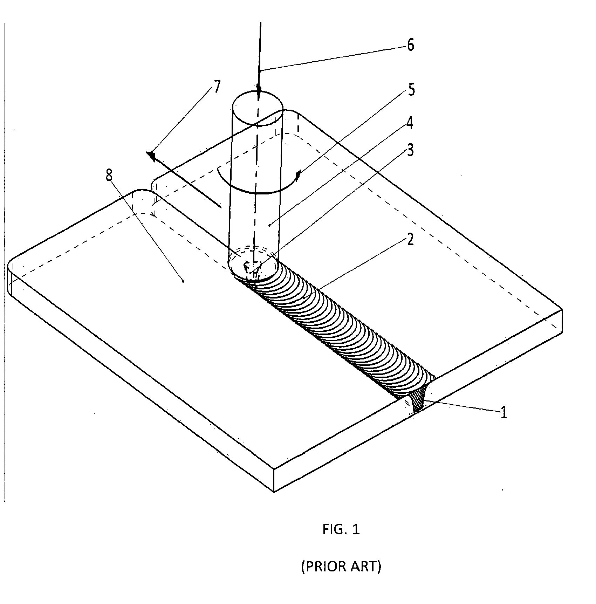

Figure 1 represents a schematic perspective view of friction stir welding with influencing parameters. Tool rotation 5 and down force 6 create friction between the shoulder 4 and the pin 3 which softens the surrounding base material of the workpiece 8 and creates a weld 1 when the FSW tool starts moving.

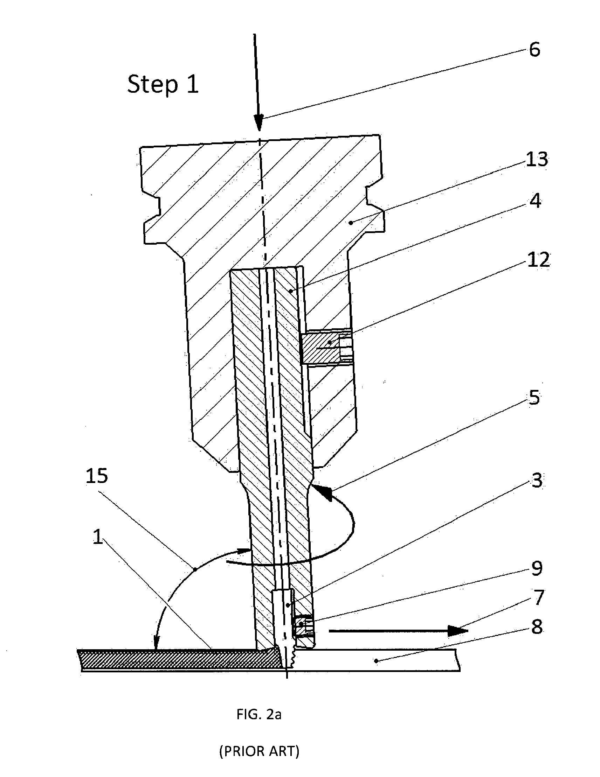

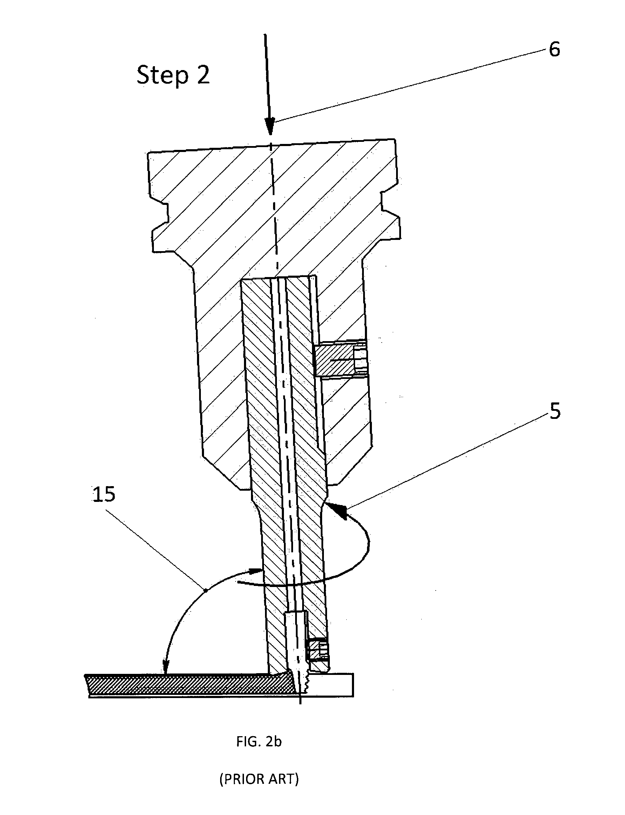

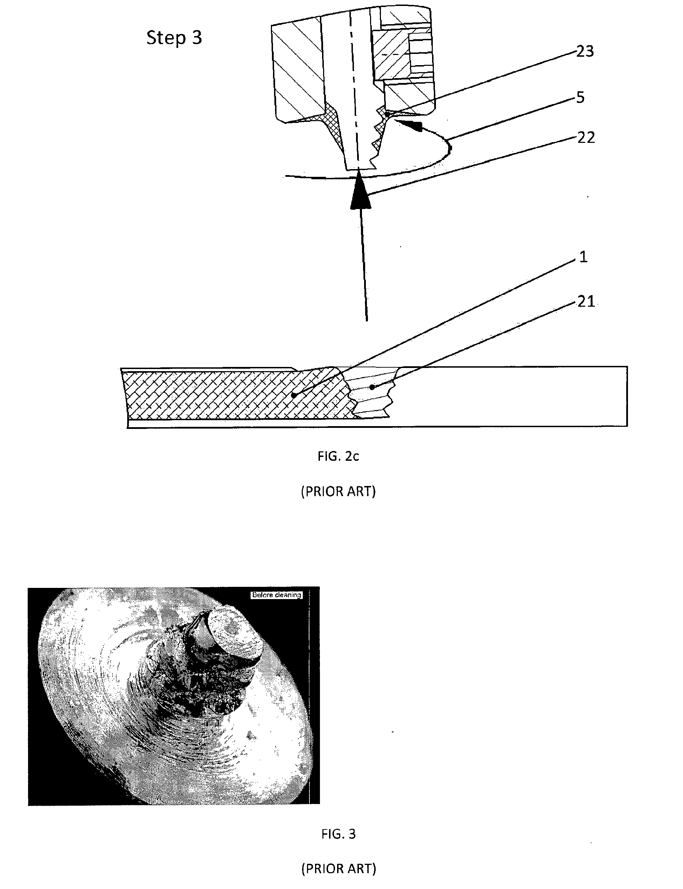

Figures 2a, 2b and 2c represent the FSW cycle with conventional tool retracting out of the workpiece. The main FSW parameters are down force 6, tool rotation 5, feed rate 7 and tool tilt angle 15, which usually varies from 88 to 85 °, depending on the FSW application. In a normal welding cycle, the tilt angle of the tool remains constant through the entire welding path. At the end of the welding path, the feed rate 7 changes its direction from horizontal to vertical, i.e. to the direction of the force 22. At the same time, the down force 6 stops acting and the tool keeps on rotating 5. In this case, the pin leaves a threated form at the exit hole 21 which becomes less distinct with the residue 23 growth. An example of plasticized residue attached to the welding tool is shown in figure 3. The residue starts appearing at the bottom of the pin (contact of pin and shoulder) and continues growing in pin tip direction. Residue decreases the efficient pin surface which negatively affects weld quality.

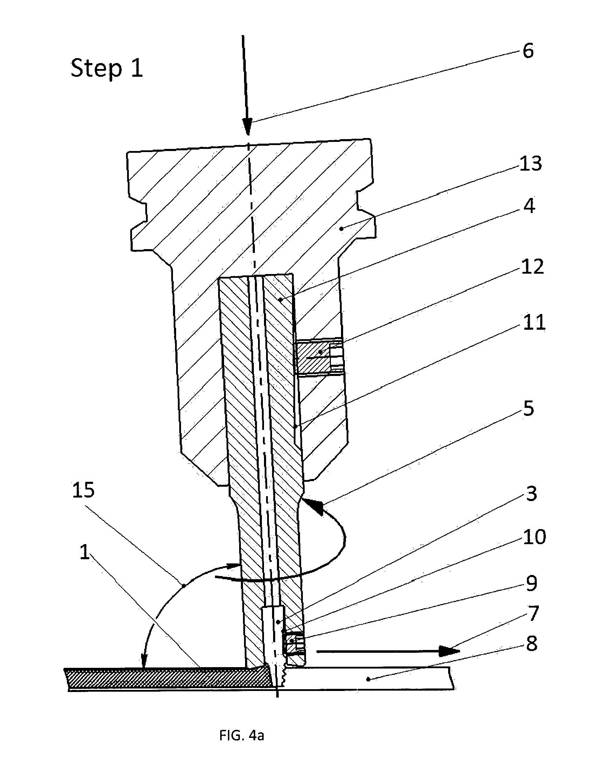

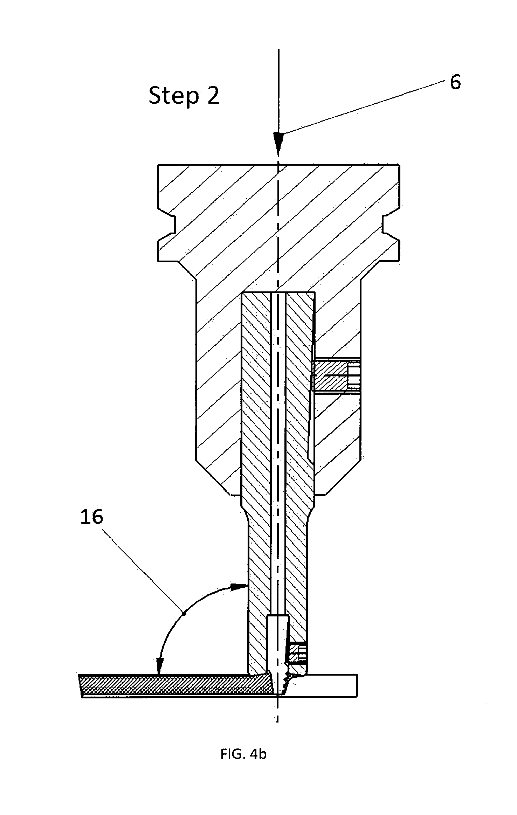

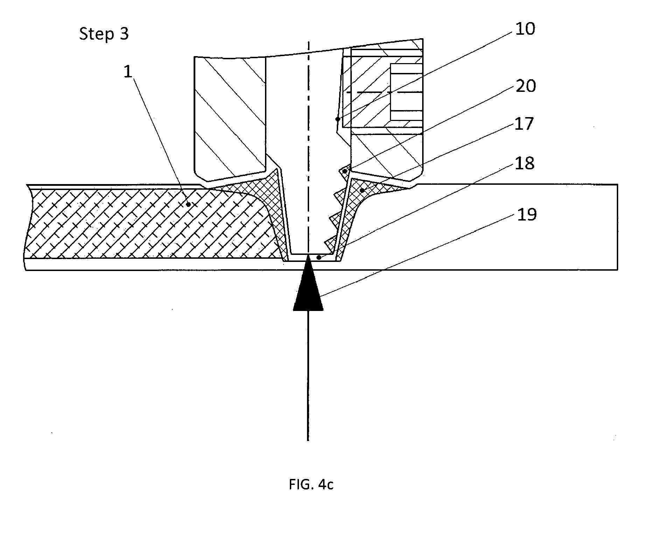

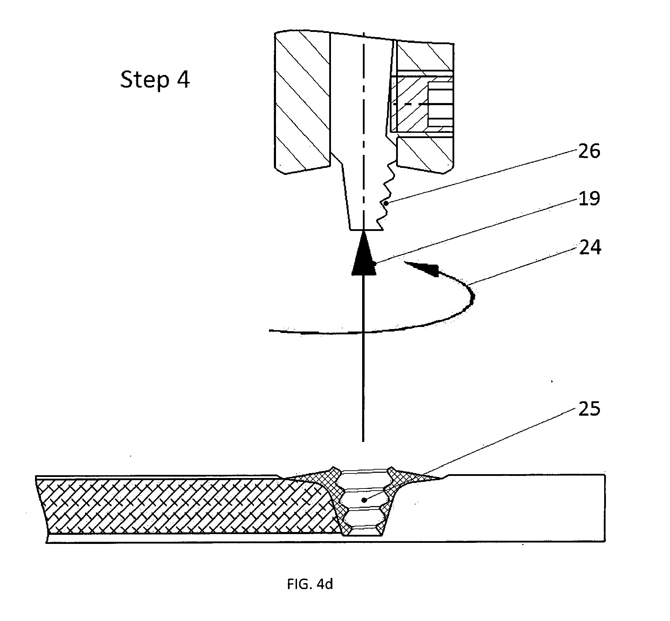

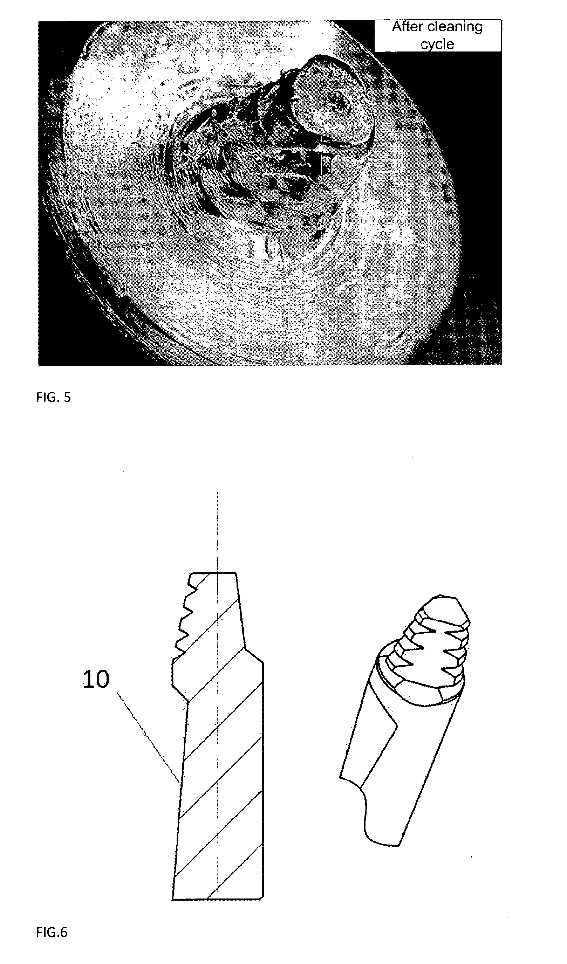

Four steps of the FSW tool cleaning method according to the invention are shown in figures 4a, 4b, 4c and 4d. During the welding the tilt angle 15 of the tool remains constant through the entire welding path as shown in Step 1. The cleaning method is applied at the end of the welding path where the tilt angle 15 of the FSW tool gradually changes to the right angle 16 as shown in step 2. At the endpoint of the welding trajectory, the tool stops for a short period of time, usually from 0,5 to 3s, the feed rate 7 and the tool rotation 5 stops, but the down force 6 is still active. At that point the welded material which was in plasticized phase solidifies around the FSW pin 3 and the shoulder 4. After the defined dwell time the tool retracts in the opposite direction 19 of the down force 6 from the work piece 8 at the right angle 16 for a short distance, i.e. 0,5 to 1mm, ripping itself out of the work piece 8. Most of the residue 17 remains attached to base material of the workpiece 8 on the walls of the exit hole 18. After this step, the exit hole 18 does not have a threated form any more, only an imprint of the pin 3. The remaining residue 20 between the helix 26 of the pin 3, which remains attached to the pin 3, is removed in the fourth step with additional retraction of the tool and simultaneous rotation 24 of the tool. After fourth step the exit hole becomes distinctive threaded form 25 again. The rotation speed in fourth step depends on the pin helix pinch (like in the CNC tapping cycle). The same FSW tool as shown in picture 3 after the cleaning cycle is shown on figure 5.

One of the main problems with the cleaning cycle is the strong bonding between the FSW tool and the workpiece which may result in pulling the tool out of the tool holder 13 when the tool is retracted, thus leaving the shoulder 4 or the pin 3 attached to the workpiece 8. To overcome this machining of a slot 10 on the pin 3 and a slot 11 on the shoulder 4 at a negative angle (2 to 3 °) is performed, using imbus or torx bolts 9, 12. This prevents the tool from being pulled out of the holder 13. The negative angle, i. e. a slot 10, on welding pin is shown in figure 6.

As mentioned before, pin breakage may occur when applying the cleaning cycle to high strength base materials or when using low strength pin materials. The cleaning cycle can be applied when the ratio between the tensile strength of the welding pin and the base material are higher than 3 (rough empirical estimation). This condition corresponds to most of non-ferrous and some ferrous metals when using high strength MP159 steel alloy.

The main advantages of this method are its compatibility with different CNC machines, energy-saving (comparing to other cleaning methods) and cleaning efficiency. This method can be applied for cleaning both parts of the FSW tool, the pin and the shoulder, of virtually any FSW tool. No additional costs are required, and the method is suitable for mass production, as well as prototype production.

In the case of mass production, the cycle can be applied every few pieces in order to save the lifetime of the tool. When using this tool cleaning method in mass or serial production, the frequency of cleaning cycles is crucial in in order to extend the tool lifetime. Applying the cycle too frequently will result in reduction of the tool lifetime because of constant tensile stress on the pin. On the other hand, applying the cycle too seldom can result in insufficient weld quality, as well as premature tool braking. The cleaning cycle should be applied after first signs of the plasticized residue being stuck between the pin and the shoulder. According to rough empirical estimation, this occurs between 10m and 30m of the weld in case of nearly optimal parameters. Regardless, the cleaning cycle increases the tool lifetime for up to 50%. Additionally, the entire cleaning cycle only takes between 1 and 4 seconds, which is much quicker than all other known methods.

In case of prototype production, there is always a lack of set-up workpieces. Due to different input materials and high prototype costs, achieving optimal welding parameters is virtually impossible. Regardless of the inherent setbacks associated with prototype production, and depending on the parameter optimality, the new FSW tool cleaning method also allows an increase in the cleaning cycle frequency in order to improve weld quality.

## Claims

1. A cleaning method for friction stir welding tool during welding cycle, the method comprising:
- changing the tilt angle (15) of the FSW tool to the right angle (16) at the end of the welding path,
- stopping the tool for a short period of time, whereby the welded material which was in plasticized phase solidifies around the FSW pin (3) and the shoulder (4) thus forming residue (17, 20),
- ripping the tool out of the workpiece (8), whereby most of the residue (17) remains attached to the base material of the workpiece (8) on the walls of the exit hole (18),
- additional retraction of the tool and simultaneous rotation (24) of the tool, whereby the remaining residue (20) between the helix (26) of the pin (3), is removed and
- machining of a slot (10) on the pin (3) and a slot (11) on the shoulder (4).

2. A method according to claim 1, **characterized in that** the stopping is performed by stopping the feed rate (7) and the tool rotation (5) with the down force (6) still active for 0.5 to 3 s.

3. A method according to claim 1, **characterized in that** the ripping is performed by retraction of the tool in the opposite direction (19) of the down force (6) from the workpiece (8) at the right angle (16) for a distance of 0.5 to 1 mm.

4. A method according to claim 1, **characterized in that** the slots (10, 11) are machined at a negative angle to prevent the tool from being pulled out of the holder (13) during cleaning cycle.
